# EUROPEAN PATENT SPECIFICATION

(11) **EP 1 523 875 B1**
(45) Date of publication and mention of the grant of the patent: **08.11.2006**
(21) Application number: 04425295.5
(22) Date of filing: 29.04.2004
(51) Int. Cl.: A01D 46/26

(54) **A portable shaking device**
Tragbare Schüttelvorrichtung
Dispositif portable de secouage

(30) Priority: 14.10.2003 IT BO20030599
(43) Date of publication of application: 20.04.2005
(73) Proprietor: Campagnola S.R.L., 40069 Zola Predosa (Bologna) (IT)
(72) Inventor: Ferretti, Pio Vittorio, 40050 Monte San Pietro (Bologna) (IT)
(74) Representative: Lanzoni, Luciano

(56) References cited:
- EP-A- 0 906 721
- EP-A- 0 933 015
- EP-A- 0 938 839
- EP-A- 1 004 233
- EP-A- 1 095 554
- US-A- 3 457 713

## Description

The present invention relates to a portable shaking device.

More specifically, the invention relates to a device for shaking trees and used for harvesting agricultural products and fruits such as olives, almonds, nuts and the like.

It is known that products of this kind are normally harvested using a shaking device comprising a vibrating pole fitted at one end with a hook designed to engage the branch from which the products are to be shaken. When the branch is shaken, the products drop to the ground where they can be more easily gathered at a later stage with the aid of nets, mats or other suitable devices.

In prior art devices of this kind, which are supported and manoeuvred by the user, the pole is vibrated by means of a motor normally mounted at one end of it. The rotational motion of the motor is converted into reciprocating motion of the pole through a link and crank mechanism.

Harvesting carried out with devices of this kind is more efficient than harvesting done by hand since the productivity of an individual harvester using one of these devices is obviously much higher than that of a harvester using only manual means.

These shaking devices are not, however, free of disadvantages.

For convenience, the motor is usually a single-cylinder internal combustion engine and its vibrating action on the pole, although very effective to shake the branches of the trees, is inevitably discharged at least partly onto the person using the device.

This is a particularly serious drawback since use of the shaking device exposes the user to vibrations which are not only disturbing but may, after prolonged use, have harmful effects on the user's health.

Since harvesting, for example, of olives, must usually be carried out in a very short period of time, intensive use must be made of the shaking devices in order to take full advantage of their performance in terms of harvesting speed and efficiency. Legislation applicable to this sector would, however, seem to pose restrictions on the prolonged use of prior art shaking devices, thus substantially nullifying the advantages they offer.

In an attempt to overcome the above mentioned drawbacks, many manufacturers now make shaking devices with vibration damping handgrips.

There are usually two such handgrips: one on the pole and the other on the central casing of the device. These handgrips often have a complex structure and, although they have reduced the problems caused by vibrations, they have not entirely eliminated the disadvantages described above.

Other solutions to reduce vibrations are shown in e.g. EP-A-0906721 and EP-A-1004233.

The aim of the present invention is to provide a shaking device capable of overcoming the disadvantages connected with the transmission of vibrations, thus significantly reducing the disturbances transmitted to the user of the shaking device.

Another aim of the invention is to provide a shaking device that is functional, simple and economical to make and practical and effective to use.

The technical characteristics of the invention, with reference to the above aims, can be easily inferred from the appended claims, in particular claim 1, and preferably any of the claims that depend, whether directly or indirectly, on claim 1.

The advantages of the invention are apparent from the detailed description which follows, with reference to the accompanying drawings which illustrate a preferred embodiment of the invention provided merely by way of example and without restricting the scope of the inventive concept, and in which:
- Figure 1 is a schematic front elevation view, with some parts cut away, of a portable shaking device according to the present invention;
- Figure 2 is a top plan view, with some parts in cross section and others cut away, of the shaking device of Figure 1;
- Figure 3 is schematic side elevation view of a detail of the device shown in the illustrations listed above;
- Figure 4 is a transversal cross section of the detail of Figure 3, through the section line IV of Figure 3;
- Figures 5 and 6 are two schematic views of two different details of the device shown in the illustrations listed above.

With reference to the accompanying drawings, the numeral 1 denotes in its entirety a portable shaking device for trees or shrubs used for harvesting agricultural products such as olives, almonds, nuts and the like.

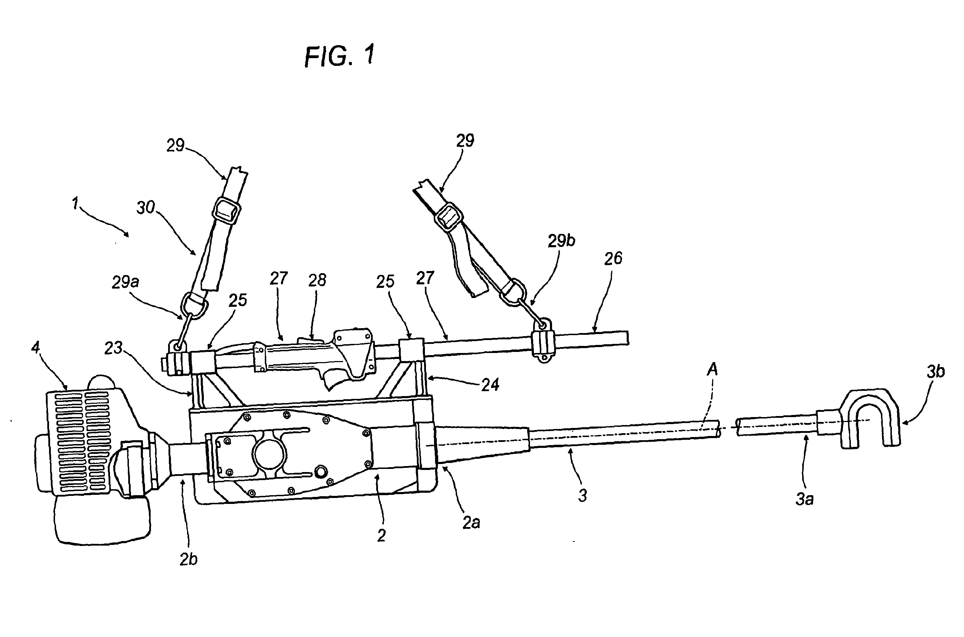

As illustrated in Figure 1, the device 1 comprises a central structure 2 from a first end 2a of which there extends along a longitudinal axis A a first, mobile pole 3 designed to move with reciprocating motion along the axis A in a substantially known manner described in more detail below.

At an outer end of it 3a, the pole 3 comprises a hook 3b for engaging the branch of a tree from which the products are to be shaken.

The central structure 2 is connected at a second end of it 2b, opposite the first end 2a, to a motor 4, which is usually an internal combustion engine but which might also be, for example, an electric or pneumatic motor. This specification refers to the internal combustion engine 4 illustrated in Figure 1 but without thereby excluding the use of other types of motors.

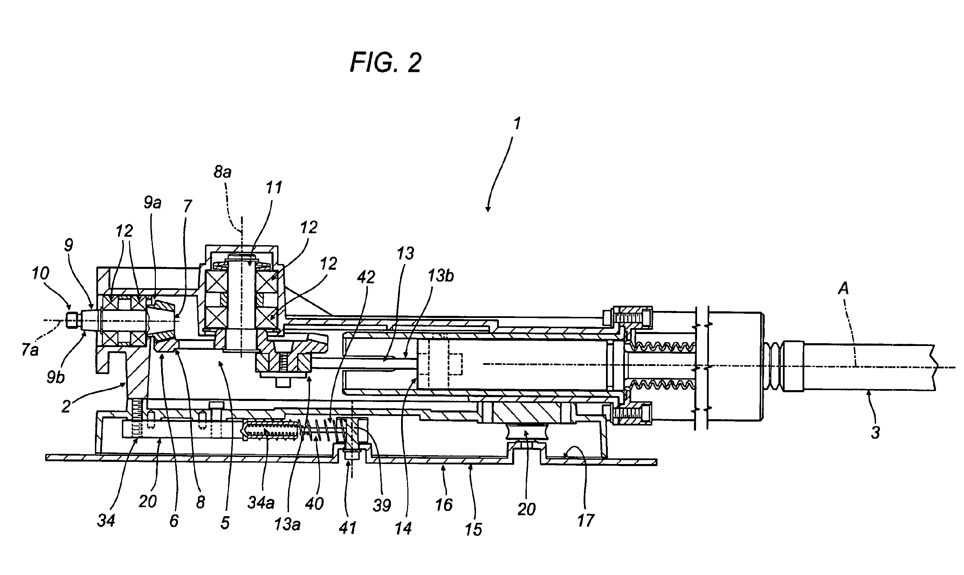

With reference to Figure 2, the central structure 2 houses a transmission unit 5 designed to transfer motion from the motor 4 to the first, mobile pole 3.

The transmission unit 5 comprises a bevel gear pair 6 consisting of a pinion 7 and a gear wheel 8 whose respective axes of rotation 7a, 8a are at right angles to each other.

The pinion 7 is keyed to a first end 9a of a first shaft 9 whose second end 9b has a power take-off 10 for the motive power provided by the motor 4.

The gear wheel 8 is keyed to a second shaft 11.

Both shafts 9, 11 are rotatably supported by respective bearings 12 of known type.

A first end 13a of a connecting rod 13 is rotatably connected to the gear wheel 8 in an eccentric position.

The gear wheel 8 constitutes the crank of a link and crank mechanism.

The connecting rod 13 has a second end 13b, longitudinally opposite the first end 13a, the second end 13b being connected to a sliding pin 14 attached directly to the first, mobile pole 3, to transmit to the latter the reciprocating motion generated by the motor 4 and by the transmission unit 5.

As shown in Figures 2, 3 and 4, the shaking device 1 comprises a mobile supporting block 15 which is rollably connected to the central structure 2.

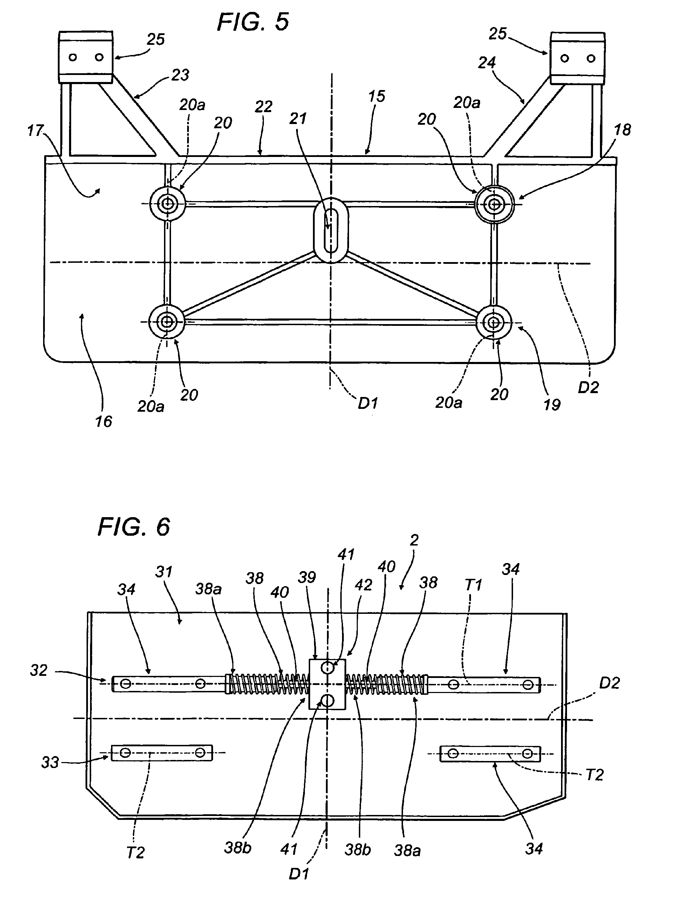

The supporting block 15, illustrated in detail in Figure 5, comprises a substantially rectangular main wall 16, on a front face 17 of which there is mounted a first pair 18 and a second pair 19 of grooved wheels 20, respectively upper and lower, that revolve freely about respective axes 20a perpendicular to the view plane of the drawing.

In a substantially central position in the main wall 16 there is a slot 21.

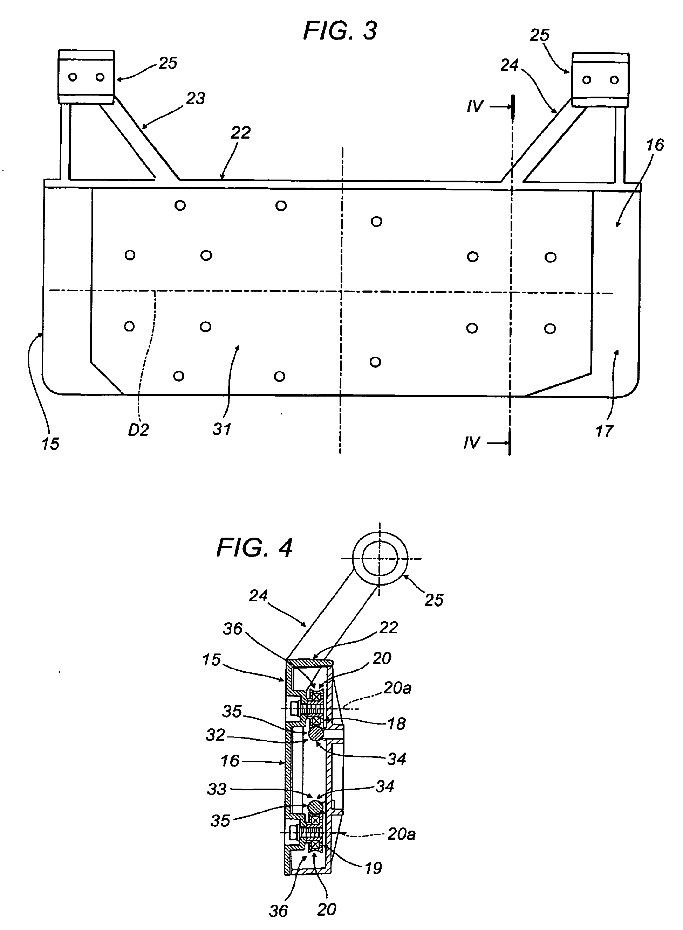

As clearly shown in Figures 4 and 5, the supporting block 15 has a covering wall 22 extending from the upper edge of the main wall 16 at right angles to the latter.

Connected to an upper portion of the main wall 16 of the supporting block 15 there are two brackets 23, 24 with two respective tubular elements 25 mounted concentrically at their top ends.

As shown in Figure 1, the device 1 comprises a second, fixed pole 26 fitted stably in the tubular elements 25 and extending lengthways in a direction substantially parallel to the first, mobile pole 3. The second, fixed pole 26 defines a handhold area 27 for both of the user's hands.

The second, fixed pole 26 mounts a customary handgrip 28 fitted with suitable devices for controlling the motor 4.

The shaking device 1 also comprises a customary shoulder strap 29 connected at its two ends 29a, 29b to the second, fixed pole 26.

The second, fixed pole 26, the handgrip 28 and the shoulder strap 29 together constitute means 30 for holding and manoeuvring the shaking device 1.

Figure 6 illustrates a rear face 31 of the central structure 2, this rear face 31 mounting a first pair 32 and a second pair 33 of bars 34, respectively upper and lower, with substantially circular cross section. Each bar 34 is substantially parallel to all the other bars 34 and the bars 34 in each upper and lower pair 32, 33 are substantially aligned with each other along two respective upper and lower paths T1, T2.

The bars 34 are connected to the face 31 by customary fastening means which are not further described.

The two pairs 32, 33 of bars 34 are spaced according to a direction D1 perpendicular to the aforementioned paths T1, T2.

With reference to Figure 4, where the mobile supporting block 15 is shown assembled to the central structure 2 of the device 1, the aforementioned grooved wheels 20 roll on the circular section bars 34. More specifically, each pair 18, 19 of upper and lower wheels 20, rolls on a respective upper or lower pair 32, 33 of bars 34. The bar 34 thus constitute respective guide tracks 35 for the grooved wheels 20.

The upper and lower paths T1, T2 constitute the respective longitudinal axes of the tracks 35.

The grooved wheels 20 constitute respective roller elements 36 that run on the guide tracks 35.

The guide tracks 35 and the roller elements 36 constitute, for the device 1, rolling means 37 placed between the central structure 2 and the supporting block 15 enabling them to move relative to each other in a direction D2 that is substantially parallel to the axis A of the first pole 3.

As shown in Figure 6, between the two bars 34 of the first, upper pair 32 there are two helical springs 38.

Each of the two springs 38 has a first, outer end 38a fitted round a respective bar 34 and a second, inner end 38b engaged with a block 39.

The block 39 has connected to it a rod 40 that is rollably engaged with the bars 34 of the first, upper pair 32, within respective holes 34 which are made in the bars themselves and one of which is shown in Figure 2.

The block 39 thus moves along the path T1 and its two-way movements are contrasted by the opposing action of the springs 38.

As shown in Figure 2, the block 39 is stably connected, by screws 41 or other customary fastening means, to the main wall 16 of the mobile supporting block 15 at the slot 21.

The block 39, springs 38 and rods 40 together constitute, for the shaking device 1, centring means 42 designed to keep the extent of relative movement between the central structure 2 and the supporting block 15 within a certain range.

In alternative embodiments which are not illustrated, the aforementioned centring means 42 might comprise magnetic repelling means instead of the springs 38.

During use, with reference to Figure 1, the user (not illustrated) slings the device 1 over his/her shoulders by the strap 29 (illustrated partly) and grips the second, fixed pole 26 with both hands at the aforementioned handhold area 27.

More specifically, one of the user's hands operates on the handgrip 28 to control the motor 4 while the other hand can be moved freely along the handhold area 27, as required.

The considerable length of the second, fixed pole 26 advantageously enables the user to easily operate and control the direction of the shaking device 1 so that the tree branches (not illustrated) can be quickly and easily engaged and disengaged by the hook 3b on the end of the mobile pole 3.

When the motor 4 is turned on, the mobile pole 3 is driven backwards and forwards in a straight line along its axis A. This reciprocating, translational motion is produced by converting the rotational motion of the motor 4 through the transmission unit 5.

The reciprocating motion of the pole 3 produces vibrations thanks to its high frequency and to the limited longitudinal stroke of the pole 3.

The vibrations of the pole 3 are transmitted to the branch engaged by the hook 3b on the end of the pole 3, thus shaking the branch and causing the products hanging from it to drop.

Advantageously, the mobile supporting block 15, which is rollably mounted between the user and the vibrating masses, prevents most of the vibrations produced by the shaking device 1 from being transmitted to the user.

That is because the central structure 2 connected to the motor 4 and housing the transmission unit 5 is free to move relative to the mobile supporting block 15 in the direction D2 parallel to the direction of oscillation of the mobile pole 3.

The relative movement between the central structure 2 and the mobile supporting block 15 is made possible by the guide tracks 35 and the grooved wheels 20. Advantageously, the friction created by the rolling of the wheels 20 on the tracks 35 and by the wheels 20 themselves revolving about their axes 20a, enhances the energy absorbing action and dampens the oscillations that would otherwise be transmitted between the structure 2 and the supporting block 15.

Advantageously and precisely to minimise the stress transmitted to the user, contact between the user and the shaking device 1 occurs entirely through parts of the device 1 that are attached to the mobile supporting block 15.

Indeed, both the shoulder strap 29 and the handhold area 27 with the handgrip 28 are mounted on, and connected to, the mobile supporting block 15.

The centring means 42 keep the relative movement between the central structure 2 and the supporting block 15 within a predetermined range defined by the maximum extension of the tracks 35 on which the wheels 20 roll.

Alternatively, or in addition to the centring means 42, limit stops (not illustrated in the accompanying drawings) might also be fitted to the tracks 35.

In alternative embodiments of the device 1 which are not illustrated, the centring means 42 comprise elastic element and/or magnetic repelling elements located at the outer ends of the tracks 35.

In further embodiments of the device 1 which are not illustrated, the positions of the tracks 35 and of the roller elements 36 might be reversed so that the former are mounted on the mobile supporting block 15 and the latter on the central structure 2. It will be understood that the invention described, useful in many industrial applications, may be modified and adapted in several ways without thereby departing from the scope of the inventive concept and that all the details of the invention may be substituted by technically equivalent elements.

## Claims

1. A portable shaking device for trees or shrubs, comprising:
- a first pole (3) mobile along its longitudinal axis (A) and designed to be hooked onto the tree branches;
- a motor (4) for driving the first pole (3);
- a unit (5) for transmitting drive from the motor (4) to the first pole (3), the transmission unit (5) imparting to the first pole (3) a substantially translational reciprocating motion along the axis (A);
- a central structure (2) for housing the transmission unit (5) and operatively connected to the motor (4) and to the first pole (3);
- means (30) for holding and manoeuvring by a user, the shaking device being **characterised in that** it further comprises a mobile supporting block (15) rollably connected to the central structure (2), the holding and manoeuvring means (30) being connected to the mobile supporting block (15).

2. The device according to claim 1, **characterised in that** it comprises rolling means (37) placed between the central structure (2) and the supporting block (15), said rolling means (37) being designed to allow the central structure (2) and the supporting block (15) to move relative to each other.

3. The device according to claim 2, **characterised in that** the relative movement occurs in a direction (D2) that is substantially parallel to the axis (A) of the first pole (3).

4. The device according to claim 2 or 3, **characterised in that** the rolling means (37) comprise at least one guide track (35) located on one of either the central structure (2) or the mobile supporting block (15), and at least one roller element (36) located on the other of either the central structure (2) or the mobile supporting block (15), the guide track (35) and the roller element (36) being designed to engage with each other in such a way as to enable the central structure (2) and the mobile supporting block (15) to move relative to each other.

5. The device according to claim 4, **characterised in that** the rolling means (37) comprise at least two parallel guide tracks (35) mounted on a rear face (31) of the central structure (2), these guide tracks (35) being straight and spaced according to a direction (D1) perpendicular to their longitudinal axes (T1, T2).

6. The device according to claim 5, **characterised in that** the rolling means (37) comprise at least two roller elements (36) mounted on a front face (17) of the mounting block (15), each roller element (36) engaging with at least one respective guide track (35).

7. The device according to any of the foregoing claims from 4 to 6, **characterised in that** the roller element is a wheel (20).

8. The device according to claim 7, **characterised in that** the wheel (20) is a grooved wheel.

9. The device according to any of the foregoing claims from 2 to 8, **characterised in that** it comprises centring means (42) designed to keep the extent of relative movement between the central structure (2) and the supporting block (15) within a certain range.

10. The device according to claim 9, **characterised in that** the centring means (42) comprise at least one elastic element (38).

11. The device according to claim 9, **characterised in that** the centring means (42) comprise magnetic repelling means.

12. The device according to any of the foregoing claims from 1 to 11 **characterised in that** the holding and manoeuvring means (30) comprise a second pole (26) fixed to the supporting block (15) and extending lengthways in a direction substantially parallel to the first, mobile pole (3), the second pole (26) defining a handhold area (27) for both of a user's hands.

13. The device according to any of the foregoing claims from 1 to 12 **characterised in that** the holding and manoeuvring means (30) comprise a shoulder strap (29) having two ends (29a, 29b) connected to the supporting block (15).

14. The device according to claim 13 when it depends on claim 12, **characterised in that** the ends (29a, 29b) of the shoulder strap (29) are both connected to the second, fixed pole (26).

15. The device according to any of the foregoing claims from 4 to 14, **characterised in that** the guide tracks (35) comprise respective limiting elements for defining the maximum extent of relative movement between the central structure (2) and the supporting block (15).

16. The device according to any of the foregoing claims from 1 to 15, **characterised in that** the motor (4) is an internal combustion engine.

17. The device according to any of the foregoing claims from 1 to 15, **characterised in that** the motor (4) is a pneumatic motor.

18. The device according to any of the foregoing claims from 1 to 15, **characterised in that** the motor (4) is an electric motor.

## Patentansprüche

1. Eine tragbare Schüttelvorrichtung für Bäume oder Sträucher, bestehend aus:
- einer ersten Stange (3), die entlang ihrer Längsachse (A) beweglich ist und dafür konzipiert ist, an den Baumzweigen eingehakt zu werden;
- einem Motor (4) für den Antrieb der ersten Stange (3);
- einer Einheit (5) für die Übertragung des Antriebs von dem Motor (4) auf die erste Stange (3), wobei die Übertragungseinheit (5) die erste Stange (3) in eine im Wesentlichen translationale Hin- und Herbewegung entlang der Achse (A) versetzt;
- einer mittleren Struktur (2), die zur Aufnahme der Übertragungseinheit (5) bestimmt ist und mit dem Motor (4) und der ersten Stange (3) wirksam verbunden ist;
- Mittel (30) zum Halten und Manövrieren durch einen Benutzer,
wobei die Schüttelvorrichtung **dadurch gekennzeichnet ist, dass** sie ferner einen beweglichen Trägerblock (15) beinhaltet, der rollbar mit der mittleren Struktur (2) verbunden ist, und dass das Halte- und Manövriermittel (30) mit dem beweglichen Trägerblock (15) verbunden ist.

2. Vorrichtung nach Anspruch 1, **dadurch gekennzeichnet, dass** sie Rollmittel (37) beinhaltet, die zwischen der mittleren Struktur (2) und dem Trägerblock (15) angeordnet sind, wobei die Rollmittel (37) so ausgeführt sind, dass sie es ermöglichen, dass sich die mittlere Struktur (2) und der Trägerblock (15) relativ zueinander bewegen.

3. Vorrichtung nach Anspruch 2, **dadurch gekennzeichnet, dass** die relative Bewegung in einer Richtung (D2) erfolgt, die im Wesentlichen parallel zu der Achse (A) der ersten Stange (3) ist.

4. Vorrichtung nach Anspruch 2 oder 3, **dadurch gekennzeichnet, dass** die Rollmittel (37) zumindest eine Führungsbahn (35) beinhalten, die entweder auf der mittleren Struktur (2) oder dem beweglichen Trägerblock (15) angeordnet ist, und zumindest ein Rollelement (36), das auf dem anderen dieser beiden Organe, also entweder auf der mittleren Struktur (2) oder dem beweglichen Trägerblock (15) angeordnet ist, wobei die Führungsbahn (35) und das Rollelement (36) so ausgeführt sind, dass sie derart ineinander eingreifen, dass sich die mittlere Struktur (2) und der bewegliche Trägerblock (15) relativ zueinander bewegen können.

5. Vorrichtung nach Anspruch 4, **dadurch gekennzeichnet, dass** die Rollmittel (37) zumindest zwei parallele Führungsbahnen (35) beinhalten, die auf einer Rückseite (31) der mittleren Struktur (2) montiert sind, wobei diese Führungsbahnen (35) gerade sind und in einer Richtung (D1) voneinander beabstandet sind, die im rechten Winkel zu ihren Längsachsen (T1, T2) verläuft.

6. Vorrichtung nach Anspruch 5, **dadurch gekennzeichnet, dass** die Rollmittel (37) zumindest zwei Rollelemente (36) beinhalten, die auf einer Vorderseite (17) des Trägerblocks (15) montiert sind, wobei jedes Rollelement (36) in zumindest eine entsprechende Führungsbahn (35) eingreift.

7. Vorrichtung nach einem der vorhergehenden Ansprüche von 4 bis 6,
**dadurch gekennzeichnet, dass** das Rollelement ein Rad (20) ist.

8. Vorrichtung nach Anspruch 7, **dadurch gekennzeichnet, dass** das Rad (20) ein Rillenrad ist.

9. Vorrichtung nach einem der vorhergehenden Ansprüche von 2 bis 8, **dadurch gekennzeichnet, dass** sie Zentriermittel (42) beinhaltet, die dafür konzipiert sind, das Ausmaß der relativen Bewegung zwischen der mittleren Struktur (2) und dem Trägerblock (15) in einem bestimmten Bereich zu halten.

10. Vorrichtung nach Anspruch 9, **dadurch gekennzeichnet, dass** die Zentriermittel (42) zumindest ein elastisches Element (38) enthalten.

11. Vorrichtung nach Anspruch 9, **dadurch gekennzeichnet, dass** die Zentriermittel (42) magnetische Abweismittel beinhalten.

12. Vorrichtung nach einem der vorhergehenden Ansprüche von 1 bis 11, **dadurch gekennzeichnet, dass** das Halte- und Manövriermittel (30) eine zweite Stange (26) beinhaltet, die an dem Trägerblock (15) befestigt ist und sich längs in einer Richtung erstreckt, die im Wesentlichen parallel zur ersten, beweglichen Stange (3) verläuft, wobei die zweite Stange (26) einen Griffbereich (27) für beide Hände des Benutzers bildet.

13. Vorrichtung nach einem der vorhergehenden Ansprüche von 1 bis 12, **dadurch gekennzeichnet, dass** das Halte- und Manövriermittel (30) einen Schulterriemen (29) beinhaltet, der zwei Enden (29a, 29b) aufweist, die mit dem Trägerblock (15) verbunden sind.

14. Vorrichtung nach Anspruch 13, sofern von Anspruch 12 abhängig, **dadurch gekennzeichnet, dass** beide Enden (29a, 29b) des Schulterriemens (29) mit der zweiten, feststehenden Stange (26) verbunden sind.

15. Vorrichtung nach einem der vorhergehenden Ansprüche von 4 bis 14, **dadurch gekennzeichnet, dass** die Führungsbahnen (35) entsprechende Begrenzungselemente zur Bestimmung des maximalen Ausmaßes der relativen Bewegung zwischen der mittleren Struktur (2) und dem Trägerblock (15) aufweisen.

16. Vorrichtung nach einem der vorhergehenden Ansprüche von 1 bis 15, **dadurch gekennzeichnet, dass** der Motor (4) ein Verbrennungsmotor ist.

17. Vorrichtung nach einem der vorhergehenden Ansprüche von 1 bis 15, **dadurch gekennzeichnet, dass** der Motor (4) ein Druckluftmotor ist.

18. Vorrichtung nach einem der vorhergehenden Ansprüche von 1 bis 15, **dadurch gekennzeichnet, dass** der Motor (4) ein Elektromotor ist.

## Revendications

1. Un dispositif portable de secouage pour arbres ou arbustes, comprenant :
- une première perche (3) mobile le long de son axe longitudinal (A) et destinée à être accrochée sur les branches d'arbre ;
- un moteur (4) pour l'entraînement de la première perche (3) ;
- un groupe (5) de transmission du mouvement du moteur (4) à la première perche (3), ledit groupe de transmission (5) imprimant à la première perche (3) un mouvement alternatif, essentiellement de translation, le long de l'axe (A) ;
- une structure centrale (2) destinée à loger le groupe de transmission (5) et reliée opérationnellement au moteur (4) et à la première perche (3) ;
- des moyens (30) de prise et de manoeuvre pour un utilisateur, le dispositif de secouage étant **caractérisé en ce qu'**il comprend en outre un bloc mobile de support (15) associé de façon roulante à la structure centrale (2), les moyens de prise et de manoeuvre (30) étant reliés au bloc mobile de support (15).

2. Le dispositif selon la revendication 1, **caractérisé en ce qu'**il comprend des moyens de roulement (37) placés entre la structure centrale (2) et le bloc de support (15), lesdits moyens de roulement (37) étant destinés à permettre un mouvement relatif entre la structure centrale (2) et le bloc de support (15).

3. Le dispositif selon la revendication 2, **caractérisé en ce que** le mouvement relatif a lieu dans une direction (D2) qui est essentiellement parallèle à l'axe (A) de la première perche (3).

4. Le dispositif selon la revendication 2 ou 3, **caractérisé en ce que** les moyens de roulement (37) comprennent au moins un rail de guidage (35) situé sur la structure centrale (2) ou le bloc mobile de support (15), et au moins un élément roulant (36) situé à l'inverse sur la structure centrale (2) ou le bloc mobile de support (15), le rail de guidage (35) et l'élément roulant (36) étant destinés à venir en prise réciproque afin de permettre le mouvement relatif entre la structure centrale (2) et le bloc mobile de support (15).

5. Le dispositif selon la revendication 4, **caractérisé en ce que** les moyens de roulement (37) comprennent au moins deux rails de guidage (35), parallèles, montés sur une face arrière (31) de la structure centrale (2), ces rails de guidage (35) étant rectilignes et espacés l'un de l'autre selon une direction (D1) perpendiculaire à leur axe longitudinal (T1, T2) respectif.

6. Le dispositif selon la revendication 5, **caractérisé en ce que** les moyens de roulement (37) comprennent au moins deux éléments roulants (36) montés sur une face avant (17) du bloc de support (15), chaque élément roulant (36) venant en prise avec au moins un rail de guidage (35) respectif.

7. Le dispositif selon l'une quelconque des revendications précédentes de 4 à 6, **caractérisé en ce que** l'élément roulant est une roue (20).

8. Le dispositif selon la revendication 7, **caractérisé en ce.que** la roue (20) est une roue cannelée.

9. Le dispositif selon l'une quelconque des revendications précédentes de 2 à 8, **caractérisé en ce qu'**il comprend des moyens de centrage (42) destinés à maintenir l'extension du mouvement relatif entre la structure centrale (2) et le bloc de support (15) dans un intervalle donné.

10. Le dispositif selon la revendication 9, **caractérisé en ce que** les moyens de centrage (42) comprennent au moins un élément élastique (38).

11. Le dispositif selon la revendication 9, **caractérisé en ce que** les moyens de centrage (42) comprennent des moyens de répulsion magnétique.

12. Le dispositif selon l'une quelconque des revendications précédentes de 1 à 11, **caractérisé en ce que** les moyens de prise et de manoeuvre (30) comprennent une deuxième perche (26) fixée au bloc de support (15) et s'étendant longitudinalement dans une direction essentiellement parallèle à la première perche (3) mobile, la deuxième perche (26) définissant une zone de prise (27) pour les deux mains d'un utilisateur.

13. Le dispositif selon l'une quelconque des revendications précédentes de 1 à 12, **caractérisé en ce que** les moyens de prise et de manoeuvre (30) comprennent une bandoulière (29) ayant deux extrémités (29a, 29b) reliées au bloc de support (15).

14. Le dispositif selon la revendication 13 quand dépendant de la revendication 12, **caractérisé en ce que** les extrémités (29a, 29b) de la bandoulière (29) sont toutes les deux reliées à la deuxième perche (26) fixe.

15. Le dispositif selon l'une quelconque des revendications précédentes de 4 à 14, **caractérisé en ce que** les rails de guidage (35) comprennent des éléments respectifs de fin de course pour définir l'extension maximum du mouvement relatif entre la structure centrale (2) et le bloc de support (15).

16. Le dispositif selon l'une quelconque des revendications précédentes de 1 à 15, **caractérisé en ce que** le moteur (4) est un moteur à combustion interne.

17. Le dispositif selon l'une quelconque des revendications précédentes de 1 à 15, **caractérisé en ce que** le moteur (4) est un moteur pneumatique.

18. Le dispositif selon l'une quelconque des revendications précédentes de 1 à 15, **caractérisé en ce que** le moteur (4) est un moteur électrique.
